# EUROPEAN PATENT APPLICATION

(11) **EP 4 848 008 A1**
(43) Date of publication of application: **02.12.2026**
(21) Application number: 25762290.2
(22) Date of filing: 10.01.2025
(51) Int. Cl.: G04R 60/10, H01Q 1/24, G06F 1/16

(54) **ELECTRONIC DEVICE**

(30) Priority: 27.02.2024 KR 20240028430; 27.03.2024 KR 20240041827
(71) Applicant: Samsung Electronics Co., Ltd, Suwon-si, Gyeonggi-do 16677 (KR)
(72) Inventor: KIM, Kijung, Suwon-si, Gyeonggi-do 16677 (KR)
(74) Representative: HGF
(86) International application number: PCT/KR2025/000616
(87) International publication number: WO 2025/183355

(57) **Abstract**

An electronic device according to an embodiment disclosed herein may comprise an electronic component. The electronic device may include a housing for accommodating the electronic component, the housing including an outer frame formed of a conductive material and an inner frame integrally formed on an inner surface of the outer frame and formed of a non-conductive material. The electronic device may include a circuit board disposed inside the housing and including a wireless communication circuit and a ground. The outer frame may be electrically connected to the wireless communication circuit and the ground, and at least a portion of the outer frame may be configured for use as an antenna element. A portion of the inner frame may be positioned between the outer frame and the electronic component to separate the outer frame and the electronic component.

## Description

### [Technical Field]

The various embodiments of the disclosure relate to an electronic device including a housing that operates as an antenna.

### [Background Art]

Generally, an electronic device may refer to a device that performs a specific function according to programmed instructions. The electronic device may include an electronic organizer, a portable multimedia player, a mobile communication terminal, a tablet personal computer (PC), a video/audio device, a desktop/laptop computer, or vehicle navigation, and the like. In recent years, as the integration density of the electronic devices increases and wireless communication becomes more widely available, various functions may be mounted in a mobile communication terminal (e.g., a smartphone). In addition to a communication function, for example, various functions such as entertainment functions (e.g., games), multimedia functions (e.g., music/video playback), security functions for mobile banking, schedule management functions or electronic wallet functions are being consolidated in the mobile terminal.

With the advancements in electronic and communication technologies, electronic devices have been trending toward miniaturization so that users can conveniently carry and wear them. Electronic devices have become so miniaturized or lightweight that users can wear them on their bodies without feeling any sense of discomfort or bulkiness. For example, in addition to mobile communication devices like smartphones, users frequently utilize wearable devices such as wireless earphones or smartwatches that can be connected to their smartphones.

To perform various functions, a wearable electronic device may include antennas that support multiple frequency bands. For instance, an electronic device may include a plurality of antennas that perform wireless communication such as LTE and Wi-Fi, as well as short-range communications such as Bluetooth. These antennas may include at least a portion of the housing as an antenna element. For example, the electronic device may utilize a metal portion forming at least a portion of the housing as a radiation element (or radiator) of the antenna.

In a case when the housing is used as a radiating element for the antenna, the recent trend of reducing the size of the housing (e.g., the bezel) may lead to interference between internal electronic components adjacent to the housing. Consequently, there is a concern that antenna performance may be degraded.

### [Disclosure of Invention]

### [Technical Problem]

The various embodiments of the disclosure can provide an electronic device including a housing comprised of an outer frame of a conductive material that functions as an antenna radiator and an inner frame of a non-conductive material, wherein the inner frame keeps the electronic components, accommodated in the housing, spaced apart from the outer frame by a predetermined distance.

An electronic device, according to an embodiment of the disclosure, may include an electronic component. The electronic device may include a housing that accommodates the electronic component, and the housing may include an outer frame formed of a conductive material and an inner frame that is integrally formed on an inner surface of the outer frame and is formed of a non-conductive material. The electronic device may include a circuit board disposed inside the housing and include a wireless communication circuit and a ground. The outer frame may be electrically connected to the wireless communication circuit and the ground and may be configured to use at least a portion thereof as an antenna element. A portion of the inner frame may be positioned between the outer frame and the electronic component to separate the outer frame and the electronic component.

A wearable electronic device that can be worn on a part of a user's body according to an embodiment of the disclosure may include an electronic component. The wearable electronic device may include a circuit board that is electrically connected to the electronic component and includes a wireless communication circuit and the ground. The wearable electronic device may include a ring-shaped housing that accommodates the electronic component and the circuit board therein and is configured to be detachably mounted on a part of the user's body. The housing may include an outer frame formed of a conductive material and an inner frame that is integrally formed on an inner surface of the outer frame and is formed of a non-conductive material. The outer frame may be electrically connected to the wireless communication circuit and the ground of the circuit board and may be configured such that at least a portion thereof operates as an antenna element. A portion of the inner frame may be positioned between the outer frame and the electronic component to separate the outer frame from the electronic components.

According to various embodiments of the disclosure, the electronic device includes a housing comprised of an outer frame of a conductive material that functions as an antenna radiator and an inner frame of a non-conductive material. Electronic components, accommodated in the housing, may be spaced apart from the outer frame by a predetermined distance by the inner frame. Accordingly, the induction of noise generated from the electronic components into the outer frame may be reduced, and antenna performance may be improved.

Effects obtainable from the exemplary embodiments of the disclosure can be clearly derived and understood from the following description by one of ordinary skill in the technical field to which the exemplary embodiments of the disclosure belong. That is, unintended effects resulting from implementing the exemplary embodiments of the disclosure may also be derived by one of ordinary skill in the technical field from the exemplary embodiments of the disclosure.

### [Brief Description of Drawings]

In connection with the description of the drawings, the same or similar reference numerals may be used for the same or similar components.
FIG. 1 is a block diagram illustrating an electronic device in a network environment according to various embodiments of the disclosure.
FIG. 2 is a front perspective view illustrating a wearable electronic device according to an embodiment of the disclosure.
FIG. 3 is a rear perspective view illustrating a wearable electronic device according to an embodiment of the disclosure.
FIG. 4 is an exploded perspective view illustrating a wearable electronic device according to an embodiment of the disclosure.
FIG. 5 is a rear view illustrating a wearable electronic device with some components omitted according to an embodiment of the disclosure.
FIG. 6 is a plan view illustrating a housing according to an embodiment of the disclosure.
FIG. 7 is a rear view illustrating a housing according to an embodiment of the disclosure.
FIG. 8 is a cross-sectional view taken along line A-A' shown in FIG. 2 according to an embodiment of the disclosure.
FIG. 9 is a cross-sectional view taken along line B-B' shown in FIG. 2 according to an embodiment of the disclosure.
FIG. 10 is a graph illustrating total radiation efficiency of an electronic device according to an embodiment of the disclosure and an electronic device according to a comparative embodiment.

### [Mode for the Invention]

The various embodiments of this document and the terminology used herein are not intended to limit the technical features described in this document to specific embodiments, and should be understood to include various changes, equivalents, or substitutions of the corresponding embodiments.

In relation to the description of the drawings, similar reference signs may be used for similar or related components.

The singular form of a noun corresponding to an item may include one or a plurality of items unless the related context clearly indicates otherwise.

In this document, each of the phrases such as "A or B," "at least one of A and B," "at least one of A or B," "A, B, or C," "at least one of A, B, and C," and "at least one of A, B, or C" may include any one of the items listed together in the corresponding phrase among those phrases, or all possible combinations thereof.

Terms such as "first," "second," or "first" or "second" may be simply used to distinguish the corresponding component from other corresponding components, and do not limit the corresponding components in other aspects (e.g., importance or order).

When a certain (e.g., first) component is referred to as "coupled" or "connected" to another (e.g., second) component, with or without the term "functionally" or "communicatively," it means that a certain component may be connected to another component directly (e.g., by wire), wirelessly, or through a third component.

Terms such as "include" or "have" are intended to specify that a feature, number, step, operation, component, part, or combination thereof described in this document exists, and do not preclude the existence or the possibility of addition of one or more other features, numbers, steps, operations, components, parts, or combinations thereof.

When a certain component is said to be "connected," "coupled," "supported," or "in contact" with another component, this includes not only cases where the components are directly connected, coupled, supported, or in contact, but also cases where the components are indirectly connected, coupled, supported, or in contact through a third component.

When a certain component is said to be positioned "on" another component, this includes not only cases where a certain component is in contact with another component, but also cases where another component exists between the two components.

The term "and/or" includes a combination of a plurality of related described components or any of a plurality of related described components.

Hereinafter, the operation principle and embodiments of the present invention are described with reference to the attached drawings below.

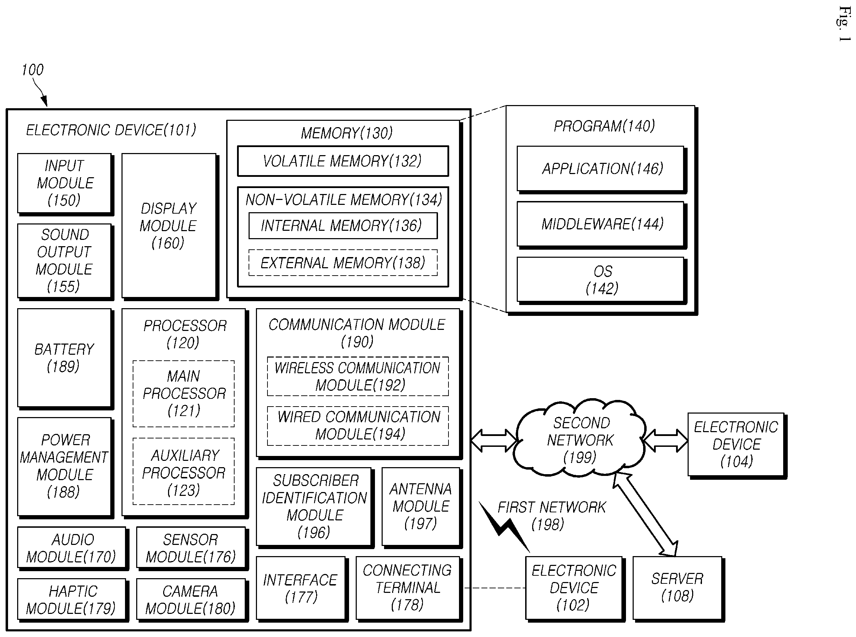

Fig. 1 is a block diagram illustrating an electronic device 101 in a network environment 100 according to various embodiments of the disclosure.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display 1module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the 11connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display 1module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display 1module 160 may visually provide information to the outside (e.g., a user) of the electronic device 101. The display 1module 160 may include, for example, a display, a hologram device, or a projector and control circuitry to control a corresponding one of the display, hologram device, and projector. According to an embodiment, the display 1module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

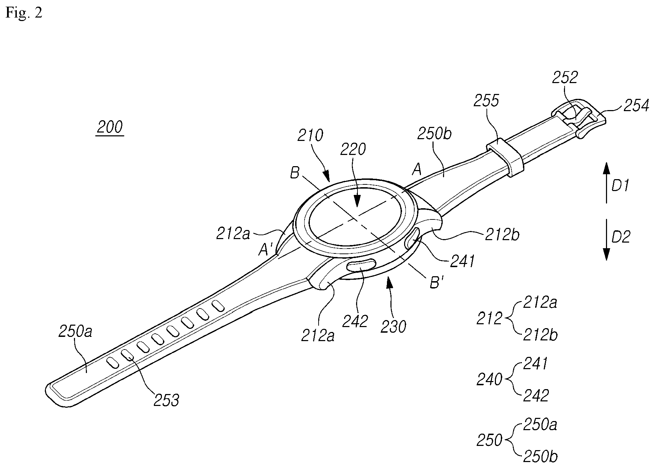

FIG. 2 is a front perspective view of a wearable electronic device according to an embodiment of the disclosure.

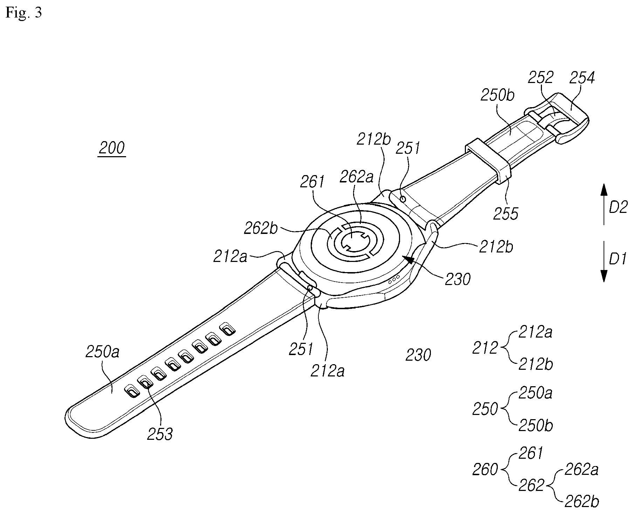

FIG. 3 is a rear perspective view of a wearable electronic device according to an embodiment of the disclosure.

Referring to FIGS. 2 and 3, the electronic device 200 (e.g., the electronic device 101 of FIG. 1) according to an embodiment may be a wearable electronic device. For example, the electronic device 200 may be a watch-type electronic device (e.g., a smartwatch) that can be worn on a part of the user's body (e.g., a wrist). However, the electronic device according to various embodiments disclosed in this document is not limited to the illustrated embodiments.

According to an embodiment, the electronic device 200 may include a housing 210, a display module 220, a back cover 230, a key input device 240, a fastening member 250, or a sensor module 260.

According to an embodiment, the housing 210 may form at least a part of the outer shape of the electronic device 200. For example, the housing 210 may form a side surface of the electronic device 200.

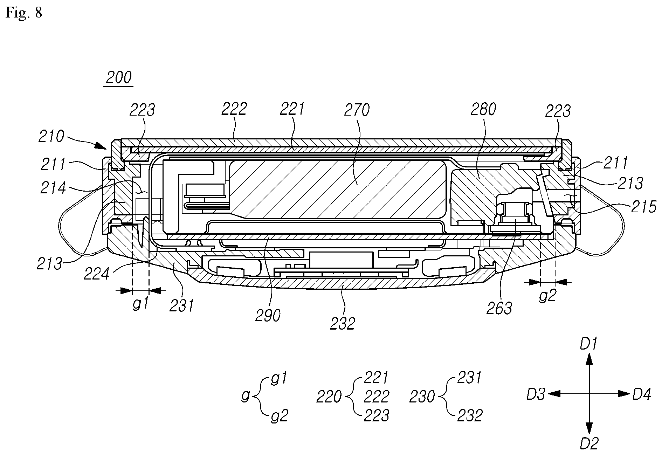

In an embodiment, the housing 210 may be combined with the display module 220 and the back cover 230. For example, the display module 220 may be combined with an upper portion of the housing 210 (e.g., a first direction D1). For example, the back cover 230 may be combined with a lower portion of the housing 210 (e.g., a second direction D2). For instance, the display module 220 and the back cover 230 may be combined with upper and lower portions of the housing 210, respectively, and may be disposed to face each other with an opening of the housing 210 (e.g., the opening 214 of FIG. 8) therebetween.

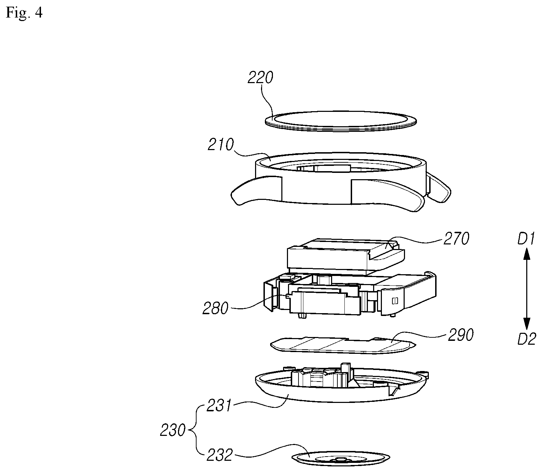

In an embodiment, the housing 210 may be configured to have a structure that encloses a space between the display module 220 and the back cover 230 in case combined with the display module 220 and the back cover 230. For instance, the housing 210 may provide an internal space in which other components of the electronic device 200 (e.g., a battery (e.g., the battery 270 of FIG. 4), a bracket (e.g., the bracket 280 of FIG. 4), and/or a circuit board (e.g., the circuit board 290 of FIG. 4)) can be accommodated when combined with the display module 220 and the back cover 230.

According to an embodiment, a lug 212 for detaching the fastening member 250 may be provided on a side surface (or circumference) of the housing 210. In an embodiment, the lug 212 may include a first lug 212a provided on one side of the housing 210 and a second lug 212b provided on the other side of the housing 210. Fastening members 250a and 250b may be detachably fastened to each of the lugs 212a and 212b.

According to an embodiment, the display module 220 may be disposed on an upper side of the housing 210 (e.g., a first direction D1). In an embodiment, the display module 220 may form a front surface of the electronic device 200 (e.g., a surface facing the first direction D1).

In an embodiment, at least a portion of the display module 220 may be visually exposed in a front direction of the electronic device 200 (e.g., a first direction (D1)). The display module 220 may output, for example, information about operations and/or states of the electronic device 200 corresponding to the key input device 240.

According to an embodiment, the back cover 230 may be disposed at a lower portion of the housing 210 (e.g., a second direction (D2)). In an embodiment, the back cover 230 may form a rear surface of the electronic device 200 (e.g., a surface facing the second direction (D2)).

According to an embodiment, the key input device 240 may receive user inputs (or commands) for implementing various functions of the electronic device 200 by being rotated and/or pressed by a user's manipulation. In an embodiment, the key input device 240 may include side keys (241, 242) disposed on a side of the housing 210. In an embodiment, at least one of the side keys (241, 242) may be implemented as an electrode button that can detect a biometric signal (e.g., electrocardiogram) of the user in case a user's body part (e.g., a finger) comes into contact therewith.

Although not explicitly shown in this drawing, the key input device 240 may further include a rotatable wheel key (not shown) disposed on the front surface of the housing 210 (e.g., a surface facing the first direction (D1)). The wheel key may have a shape corresponding to the shape of the display module 220 of the housing 210. The wheel key may have, for example, a ring shape overall to surround the display module 220 exposed to the outside. In an embodiment, the wheel key may rotate by a user's manipulation to receive user inputs (or commands) for implementing various functions of the electronic device 200.

In an embodiment, the electronic device 200 may not include at least some or all of the aforementioned key input device 240. A key input device not included may be implemented in another form, for example, as a soft key (or, a touch key) on the display module 220.

According to an embodiment, the fastening member 250 may allow the electronic device 200 to be detachably worn on a user's body part (e.g., a wrist). For example, the fastening member 250 may be connected to at least a portion of the housing 210 (e.g., a lug 212) and may be configured to be detachably fastened in a state where it wraps around a user's body part. In an embodiment, the fastening member 250 may include a first fastening member 250a and a second fastening member 250b respectively coupled to opposite sides of the housing 210. The first fastening member 250a and the second fastening member 250b may be connected to or separated from each other.

According to an embodiment, the fastening member 250 may be provided in the form of a band or strap that may wrap around a user's body part. The fastening member 250 may be referred to as a band or a strap. The fastening member 250 may be comprised of, for example, woven fabric, leather, rubber, urethane, metal, ceramic, or a combination of at least two of the aforementioned materials. The fastening member 250 may be provided such that, for example, a single unit or a plurality of unit links are movable relative to each other.

According to an embodiment, the fastening member 250 may include a locking member 251, a fixing member 252, one or more fastening holes 253, a band guide member 254, and/or a band fixing ring 255. The locking member 251 may detachably connect the fastening member 250 to at least a partial area of the housing 210 (e.g., a lug 212). The fixing member 252 may fix the housing 210 and the fastening member 250 to a user's body part (e.g., a wrist) by being inserted into one or more fastening holes 253. The band guide member 254 may press the fastening member 250 closely against a user's body part by limiting the movement range of the fixing member 252 in case the fixing member 252 is fastened to the fastening hole 253. The band fixing ring 255 may limit the movement range of the fastening member 250 in a state where the fixing member 252 and the fastening hole 253 are fastened.

According to an embodiment, the sensor module 260 may generate electrical signals or data values corresponding to biometric information of the user, an operating state of the electronic device 200, or an external environment state.

According to an embodiment, the sensor module 260 may include a first biometric sensor 261 exposed to the back cover 230. The first biometric sensor 261 may be, for example, a heart rate measurement sensor. A biometric signal detected through the first biometric sensor 261 may be a biometric signal related to heart rate. In an embodiment, the first biometric sensor 261 may be disposed inside the housing 210. In an embodiment, at least a portion of the first biometric sensor 261 may be visually exposed through a portion of the back cover 230 from a rear surface of the electronic device 200 (e.g., a surface facing the second direction (D2)).

According to an embodiment, the sensor module 260 may include a second biometric sensor 262 disposed on the back cover 230. The second biometric sensor 262 may be, for example, an electrocardiogram sensor. A biometric signal detected through the second biometric sensor 262 may be a biometric signal related to an electrocardiogram. In an embodiment, in the event that the electronic device 200 is worn by a user, the second biometric sensor 262 may include a first electrode area 262a and a second electrode area 262b that come into contact with the user's body. In an embodiment, the first electrode area 262a and the second electrode area 262b may be composed of a conductive material. The second biometric sensor 262 may obtain an electrical signal from a user's body part (e.g., a wrist) through the electrode areas (262a, 262b) and may detect a biometric signal of the user based on the obtained electrical signal. In an embodiment, the first electrode area 262a and the second electrode area 262b may be symmetrically disposed to surround the first biometric sensor 261.

According to an embodiment, the electronic device 200 may further include at least one of other sensor modules not explicitly shown in this drawing, such as a gesture sensor, a gyro sensor, an atmospheric pressure sensor (e.g., the atmospheric pressure sensor 263 of FIG. 8), a magnetic sensor, an acceleration sensor, a grip sensor, a color sensor, an infrared ray (IR) sensor, a biometric sensor, a temperature sensor, a humidity sensor, or an illuminance sensor.

FIG. 4 is an exploded perspective view illustrating a wearable electronic device according to an embodiment of the disclosure.

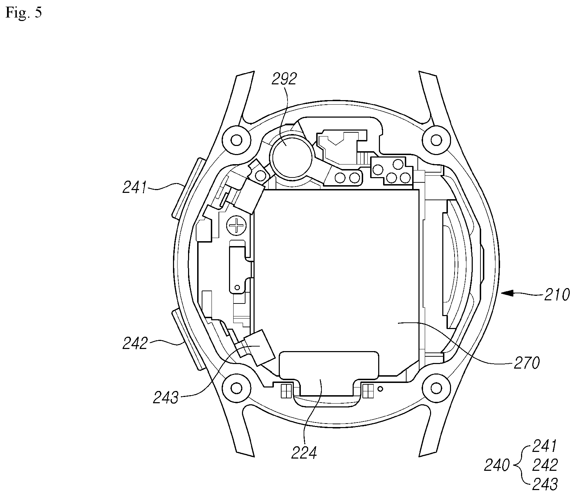

FIG. 5 is a rear view of a wearable electronic device with some components omitted according to an embodiment of the disclosure.

Specifically, FIG. 5 is a view of the electronic device 200 with the back cover 230 and the circuit board 290 of FIG. 4 removed, viewed from a rear direction (e.g., a second direction (D2)).

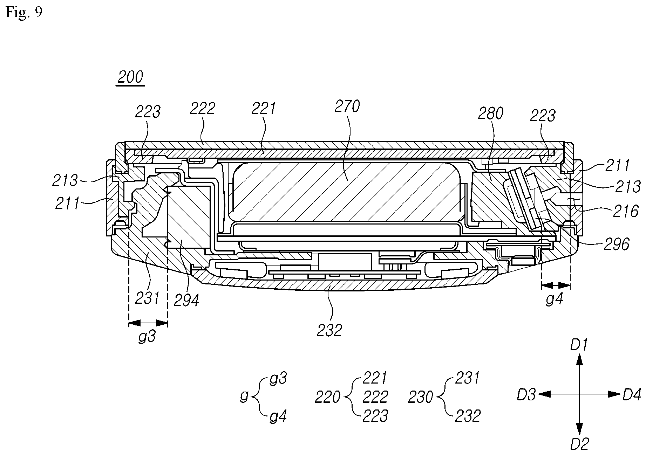

Referring to FIGS. 4 and 5, the electronic device 200 according to an embodiment may include a housing 210, a display module 220, a back cover 230, a battery 270, a bracket 280, a circuit board 290, a haptic module 292, a speaker module (e.g., the speaker module 294 of FIG. 9), or a microphone module (e.g., the microphone module 296 of FIG. 9).

Some of the components of the electronic device 200 illustrated in FIGS. 4 and 5 may be the same or similar to the components of the electronic device 200 illustrated in FIGS. 2 and 3, and accordingly, redundant descriptions are omitted.

According to an embodiment, an air hole (e.g., the air hole 215 of FIG. 8) may be formed on a portion of the housing 210. The air hole 215 may be in fluid communication with the inside of the housing 210. The air hole 215 may be utilized as a path through which air flows between the inside and outside of the housing 210. In an embodiment, a sensor module for detecting the external environment of the electronic device 200 may be disposed on the bracket 280. For example, the atmospheric pressure sensor 263 may be disposed on the bracket 280 adjacent to the air hole 215. External air of the housing 210 may flow to the atmospheric pressure sensor 263 through the air hole 215.

According to an embodiment, a microphone hole (e.g., the microphone hole 216 of FIG. 9) may be formed on a portion of the housing 210. In an embodiment, inside the housing 210, a microphone module 296 for acquiring external sounds may be disposed adjacent to the microphone hole 216.

According to an embodiment, the display module 220 may include a display (e.g., the display 221 of FIGS. 8 and 9), a glass layer (e.g., the glass layer 222 of FIGS. 8 and 9), or a support member (e.g., the support member 223 of FIGS. 8 and 9).

According to an embodiment, the display 221 may be attached to a rear surface of the glass layer 222 (e.g., a surface facing the second direction (D2)). In an embodiment, the glass layer 222 may be provided to be at least partially transparent so that the display 221 may be visually exposed in a front direction of the electronic device 200 (e.g., a first direction (D1)). For example, the glass layer 222 may be formed as a glass plate or polymer plate including various coating layers. In an embodiment, the support member 223 may be provided at an edge of a rear surface of the display 221 (e.g., a surface facing the second direction (D2)) and may support the display 221 so that it may be fixed to the housing 210. For example, an adhesive may be applied to one surface of the support member 223 that contacts the housing 210 to fix the display 221.

According to an embodiment, the back cover 230 may include a back plate 231 coupled to the housing 210 or a glass portion 232 coupled to the back plate 231. For example, the back cover 230 may be formed as a combined structure of the back plate 231 and the glass portion 232. In an embodiment, the glass portion 232 may be provided as a separate member from the back plate 231 and be coupled to the back plate 231 but is not limited thereto and may also be provided integrally with the back plate 231.

According to an embodiment, the back cover 230 may be formed by coated or colored glass, ceramic, polymer, metal (e.g., aluminum, stainless steel, or magnesium), or a combination of at least two of the aforementioned materials. For example, the back plate 231 may be composed of an opaque material. For example, the glass portion 232 may be formed to be at least partially transparent so that light may pass through for operation of an optical sensor module (e.g., the biometric sensors (261, 262) of FIG. 3). The biometric sensors (261, 262) may easily detect a biometric signal of the user through the glass portion 232.

According to an embodiment, the battery 270 may supply power to at least some of the components of the electronic device 200. For example, the battery 270 may include a rechargeable secondary battery. The battery 270 may be disposed inside the housing 210 by being supported by the bracket 280. For example, at least a portion of the battery 270 may be surrounded by the bracket 280. In an embodiment, the battery 270 may be disposed integrally within the electronic device 200 or may be detachably disposed with the electronic device 200.

According to an embodiment, the bracket 280 is disposed inside the housing 210 and may support other components of the electronic device 200 (e.g., the battery 270, the circuit board 290, the haptic module 292, and/or the microphone module 296). The bracket 280 may be disposed inside the opening 214 of the housing 210 so as to be surrounded by the housing 210. The bracket 280 may be formed of metal material and/or non-metal (e.g., polymer) material.

According to an embodiment, a bracket 280 may be disposed between a back cover 230 and a display 221. The bracket 280 may provide a predetermined space (not shown) in which a battery 270 may be accommodated. The haptic module 292 for providing vibration or haptic feedback to a user may be disposed on one side of the bracket 280. A microphone module 296 may be disposed on one side of the bracket 280. For example, the microphone module 296 may be coupled to one side of the bracket 280 to be positioned adjacent to a microphone hole 216.

According to an embodiment, the circuit board 290 may be supported by the bracket 280. For example, the circuit board 290 may be disposed between the back cover 230 and the bracket 280. For example, the circuit board 290 may be configured such that one side (e.g., a side facing a first direction (D1)) rests on the bracket 280, and another side (e.g., a side facing a second direction (D2)) is spaced apart from and faces the back cover 230. The circuit board 290 may include, for example, the PCB.

According to an embodiment, various electronic components may be electrically connected to a circuit board 290. For example, a display module 220 may be electrically connected to the circuit board 290. For instance, the display module 220 may be connected to the circuit board 290 as a connector 224 of the display 221 passes through a portion of the bracket 280. The connector 224 of the display 221 may be provided as a flexible PCB (FPCB) type. For example, side keys (241, 242) of a key input device 240 may be connected to the circuit board 290 through a connector 243. The connector 243 of the side keys (241, 242) may be provided as the FPCB type.

According to an embodiment, on a circuit board 290, electronic components such as a processor (e.g., processor 120 of FIG. 1), memory (e.g., memory 130 of FIG. 1), a communication module (e.g., communication module 190 of FIG. 1), various sensor modules (e.g., sensor module 176 of FIG. 1), an interface (e.g., interface 177 of FIG. 1), or a connection terminal (e.g., connection terminal 178 of FIG. 1) may be disposed. The processor may include, for example, one or more of CPU, an AP, a GPU, a sensor processor, or a CP. Memory may include, for example, volatile memory or non-volatile memory. The interface may include, for example, an HDMI, a USB interface, a secure digital (SD) card interface, or an audio interface. The interface may electrically or physically connect the electronic device 200 to an external electronic device, and may include a USB connector, an SD connector, a multimedia connect (MMC) connector, or an audio connector.

Although not explicitly shown in the present drawing, the electronic device 200 may further include an antenna (not shown) (e.g., antenna module 197 of FIG. 1) provided in a flat plate or film form. The antenna may communicate with an external device, may wirelessly transmit and receive power required for charging, and may transmit a magnetic-based signal including a near-field communication signal or payment data. For example, the antenna may include an NFC (near field communication) antenna, a wireless charging antenna, or an MST (magnetic secure transmission) antenna. However, the above-described antenna is exemplary and is not limited thereto.

In various embodiments, the electronic device 200 may be configured such that at least a portion of a housing 210 functions as an antenna. In case at least a portion of the housing 210 functions as an antenna, as illustrated in FIG. 5, noise generated from various electronic components adjacent to the housing 210 (e.g., connectors (e.g., FPCB) (224, 243), an atmospheric pressure sensor 263, a haptic module 292, a speaker module 294, and a microphone module 296) may be transmitted to the housing 210, which may cause degradation of antenna performance. Accordingly, there is a need to space the housing 210 and electronic components adjacent to the housing 210 apart from each other by a predetermined distance.

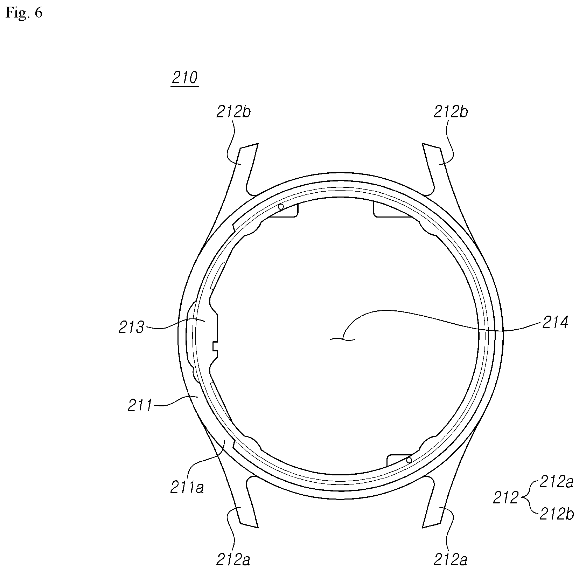

FIG. 6 is a plan view illustrating a housing according to an embodiment of the disclosure.

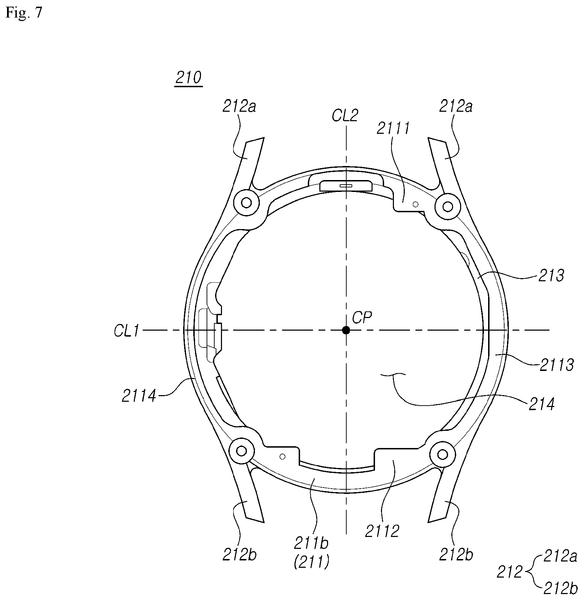

FIG. 7 is a rear view illustrating a housing according to an embodiment of the disclosure.

FIG. 8 is a cross-sectional view taken along line A-A' shown in FIG. 2 according to an embodiment of the disclosure.

FIG. 9 is a cross-sectional view taken along line B-B' shown in FIG. 2 according to an embodiment of the disclosure.

Referring to FIGS. 6 to 9, the electronic device 200 according to an embodiment may include a housing 210, a display module 220, a back cover 230, a sensor module 260, a battery 270, a bracket 280, a circuit board 290, a speaker module 294, or a microphone module 296.

Some of the components of the electronic device 200 shown in FIGS. 6 to 9 may be identical to or similar to the components of the electronic device 200 shown in FIGS. 2 to 5, and hereinafter, redundant descriptions are omitted.

According to an embodiment, at least a portion of a housing 210 may be utilized as an antenna. For example, at least a portion of the housing 210 may operate as an antenna for transmitting and/or receiving wireless signals, and to this end, at least a portion of the housing 210 may be electrically connected to the circuit board 290.

According to an embodiment, the housing 210 may include an outer frame 211, a lug 212, an inner frame 213, or an opening 214.

According to an embodiment, the outer frame 211 may have a ring shape overall. In an embodiment, the outer frame 211 may constitute a portion of a side surface (e.g., outer surface) of the housing 210. In an embodiment, the outer frame 211 may be made of a conductive material. For example, the outer frame 211 may be made of a metal such as aluminum, stainless steel, or titanium. In an embodiment, the outer frame 211 may extend to have a thickness specified in the height direction of the electronic device 200 (e.g., a first direction (D1) or a second direction (D2)).

According to an embodiment, the outer frame 211 may include a front surface (e.g., a surface facing a first direction (D1)) 211a and a rear surface (e.g., a surface facing a second direction (D2)) 211b, facing a direction opposite to the front surface.

According to an embodiment, the outer frame 211 may include a first portion 2111 and a second portion 2112 provided on the rear surface 211b of the outer frame 211. In an embodiment, the first portion 2111 and the second portion 2112 may project or extend from the rear surface 211b of the outer frame 211 toward the inside of the opening 214. For example, the first portion 2111 and/or the second portion 2112 may project from an edge portion of the rear surface 211b of the outer frame 211.

According to an embodiment, the first portion 2111 and/or the second portion 2112 may be provided at a position symmetric with respect to a first center line (CL1). The first portion 2111 and/or the second portion 2112 may be provided on the right side with respect to a second center line (CL2) when viewing the housing 210 from a second direction (D2). The length of a portion (e.g., first edge portion 2113) of the outer frame 211 extending clockwise from the first portion 2111 to the second portion 2112 may be shorter than the length of a portion (e.g., second edge portion 2114) extending counterclockwise from the first portion 2111 to the second portion 2112. The first center line (CL1) is a horizontal line passing through a center (CP) of the housing 210, the second center line (CL2) is a vertical line passing through a center (CP) of the housing 210, and the first center line (CL1) and the second center line (CL2) may perpendicularly intersect at the center (CP) of the housing 210.

According to an embodiment, the outer frame 211 of the housing 210 may be electrically connected to the circuit board 290 to operate as an antenna. For example, the outer frame 211 may operate as an antenna for transmitting and receiving wireless signals, being electrically connected to the circuit board 290, supplied at the first portion 2111, and grounded at the second portion 2112.

According to an embodiment, the housing 210 may be electrically connected to the circuit board 290 through a first portion 2111 and/or a second portion 2112 of the outer frame 211.

According to an embodiment, a wireless communication circuit or a wireless communication module (e.g., wireless communication module 192 of FIG. 1) may be disposed on the circuit board 290. The wireless communication module 192 may be electrically connected to the first portion 2111 of the outer frame 211 through a transmission line (not shown) formed on the circuit board 290 and a connector (not shown) electrically connected to the transmission line. The connector may include a C-clip or a surface-mount device (SMD) conductive gasket, but the disclosure is not limited thereto.

According to an embodiment, the circuit board 290 may include a ground area (or ground plane) for grounding electronic components. The ground area may include a conductive layer located on at least one layer of the circuit board 290. The ground area may be formed as one or a plurality of areas on one or a plurality of layers of the circuit board. According to various embodiments, the ground area may be referred to as at least one ground portion. The ground area may be electrically connected to the second portion 2112 of the outer frame 211 through a connector (not shown). The connector may include a C-clip or an SMD conductive gasket, but the disclosure is not limited thereto.

According to an embodiment, the outer frame 211 may form a resonant frequency corresponding to a designated band. According to an embodiment, the outer frame 211 may be supplied at the first portion 2111 and shorted with the ground area (or ground plane) at the second portion 2112, to form a resonant frequency band using the length (or path) of the edge portions 2113, 2114. The resonant frequency may vary depending on the length of the edge portions 2113, 2114 of the outer frame 211. In an embodiment, the wireless communication module 192 may supply the first portion 2111 of the outer frame 211 to transmit and receive wireless signals in a resonant frequency band.

According to an embodiment, a lug 212 may be provided to fix a fastening member (e.g., fastening member 250 of FIGS. 2 and 3) to the housing 210. The lug 212 may include a first lug 212a and a second lug 212b.

According to an embodiment, the inner frame 213 may have a ring shape overall. In an embodiment, the inner frame 213 may constitute a portion of a side surface (e.g., inner surface) of the housing 210. In an embodiment, the inner frame 213 may be integrally provided with the outer frame 211, and together with the outer frame 211, may constitute the housing 210. For example, the inner frame 213 may be integrally provided with the outer frame 211 by insert injection on the inner side of the outer frame 211. According to an embodiment, the inner frame 213 may extend to have a thickness specified in the height direction of the electronic device 200 (e.g., a first direction D1 or a second direction D2).

According to an embodiment, the inner frame 213 may be made of a non-conductive material. For example, the inner frame 213 may be formed of a polymer material.

According to an embodiment, the inner frame 213 may support the bracket 280 and electronic components (e.g., circuit board 290, haptic module 292, and microphone module 296) disposed on the bracket 280 within the electronic device 200.

According to an embodiment, the inner frame 213 may be positioned between at least a portion of the electronic component accommodated inside the electronic device 200 and the outer frame 211. In an embodiment, the inner frame 213 may separate at least a portion of the electronic components accommodated inside the electronic device 200 by a predetermined distance g in the horizontal direction (e.g., the third direction D3 or the fourth direction D4) (or in the radial direction). For example, as illustrated in FIGS. 8 and 9, the electronic components (e.g., the connector 224, the atmospheric pressure sensor 263, the speaker module 294, the microphone module 296) may be spaced apart from the outer frame 211, which is an antenna radiator, by predetermined distances g1, g2, g3, g4 through the inner frame 213. The spacing distance g may be designed within a range such that noise generated from the electronic components is not transmitted to the outer frame 211. For example, the spacing distance g may be designed to be greater than or equal to 5 mm, but the disclosure is not limited thereto. The inner frame 213 may also be referred to as a spacer or a gap member. In an embodiment, the inner frame 213 may be designed to have a width (e.g., 5 mm) designated in the horizontal direction (e.g., the third direction D3 or the fourth direction D4) such that the electronic components are spaced apart from the outer frame 211 by at least a predetermined distance. The electronic device 200 may improve antenna performance by securing a spacing distance between the outer frame 211, which is an antenna radiator, and the electronic components inside the electronic device 200.

According to an embodiment, the opening 214 may be defined by the outer frame 211 and the inner frame 213. In an embodiment, the opening 214 is open in the upper and lower directions (e.g., the first direction D1 and the second direction D2), and various electronic components (e.g., the display module 220 or the bracket 280) may be accommodated inside the housing 210 through the opening 214.

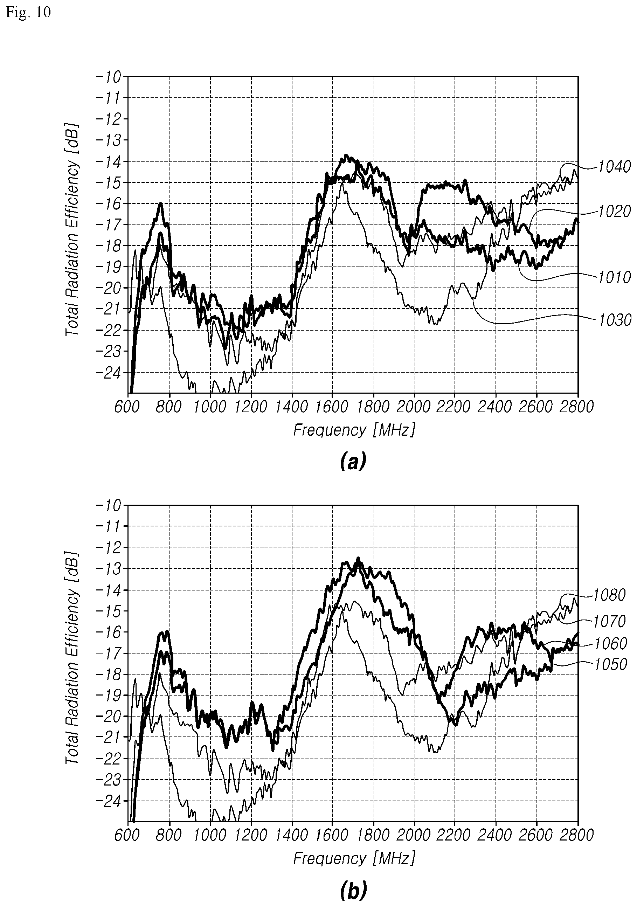

FIG. 10 is a graph illustrating the total radiation efficiency of an electronic device according to an embodiment of the disclosure and an electronic device according to a comparative example.

FIGS. 10(a) and 10(b) are graphs illustrating the total radiation efficiency according to the thickness (or width) of the inner frame (e.g., the inner frame 213 of FIG. 6). For example, the thickness of the inner frame 213 in FIG. 10(b) may be thicker than the thickness of the inner frame 213 in FIG. 10(a).

Reference numerals 1010, 1020, 1050, 1060 in FIGS. 10(a) and 10(b) are graphs illustrating the radiation efficiency of an electronic device according to various embodiments (e.g., the electronic device 200 of FIGS. 2 to 9).

In an embodiment, the electronic device 200 may not have an antenna structure in which the entire housing 210 is made of conductive material. For example, the outer frame 211 of the housing 210 may be composed of conductive material and may be electrically connected to a circuit board (e.g., the circuit board 290 of FIG. 8) to operate as an antenna radiator. For example, the inner frame 213 of the housing 210 may be composed of non-conductive material and may separate the outer frame 211, which is an antenna radiator, and the electronic components inside the housing 210 by a predetermined distance.

Reference numerals 1030, 1040, 1070, 1080 in FIGS. 10(a) and 10(b) are graphs illustrating the radiation efficiency of an electronic device according to various comparative examples.

Unlike the electronic device 200 according to an embodiment, the electronic device according to a comparative example may have the entire housing 210 composed of conductive material and may be electrically connected to the circuit board 290 to operate as an antenna radiator. For example, a spacing distance may not be secured between the housing 210, which is an antenna radiator, and the electronic components inside the housing 210.

Referring to FIG. 10, in the electronic device 200 according to an embodiment, as an inner frame 213 made of non-conductive material is integrally injection-molded onto the outer frame 211 made of conductive material, the antenna performance may be improved by securing a spacing distance between the outer frame 211, which is an antenna radiator, and electronic components inside the housing 210.

The electronic device 200 according to an embodiment may stably transmit and/or receive signals of a desired frequency band through the secured spacing distance between the outer frame 211 and the electronic components inside the housing 210. For example, the radiation efficiency 1010, 1020, 1050, 1060 of the electronic device 200 according to an embodiment in a certain frequency band may be improved compared to the radiation efficiency 1030, 1040, 1050, 1060 of the electronic device according to a comparative example. As illustrated in FIG. 10, the radiation efficiency 1010, 1020, 1050, 1060 according to an embodiment in the frequency band of approximately 800 MHz to 2000 MHz may be about 1 dB or more higher than the radiation efficiency 1030, 1040, 1050, 1060 of the electronic device according to a comparative example.

An electronic device 200 according to an embodiment of the disclosure may include electronic components 224, 243, 263, 292, 294, 296. The electronic device 200 may include a housing 210 that accommodates the electronic components 224, 243, 292, 294, 296 and includes an outer frame 211 formed of conductive material and an inner frame 213 integrally formed on the inner surface of the outer frame 211 and formed of non-conductive material. The electronic device 200 may include a circuit board 290 disposed inside the housing 210 and including a wireless communication circuit and ground. The outer frame 211 may be electrically connected to the wireless communication circuit and the ground and may be configured to use at least a portion thereof as an antenna element. A portion of the inner frame 213 may be positioned between the outer frame 211 and the electronic components 224, 243, 292, 294, 296 to separate the outer frame 211 and the electronic components 224, 243, 292, 294, 296.

According to an embodiment, the inner frame 213 may be configured to limit noise generated from the electronic components 224, 243, 292, 294, 296 from being transmitted to the outer frame 211.

According to an embodiment, the housing 210 may include a bracket 280 configured to fix the circuit board 290 and/or the electronic components 263, 296 inside the housing 210.

According to an embodiment, the inner frame 213 may be adjacent to the bracket 280 to surround the bracket 280 and may separate the outer frame 211 and the electronic components 224, 243, 263, 292, 294, 296 in the horizontal direction.

According to an embodiment, the inner frame 213 may be integrally formed on the outer frame 211 by an insert injection process.

According to an embodiment, the inner frame 213 may separate the outer frame 211 and the electronic components 224, 243, 263, 292, 294, 296.

According to an embodiment, the housing 210 may have a ring shape and may include an opening 214 for accommodating the electronic components 224, 243, 263, 292, 294, 296 inside. The inner frame 213 may extend along the inner surface of the outer frame 211 and may protrude toward the opening 214.

According to an embodiment, the outer frame 211 may include a first portion 2111 and a second portion 2112 extending inward from the outer frame 211 to face at least a portion of the circuit board 290.

According to an embodiment, the first portion 2111 of the outer frame 211 may be configured to be electrically connected to the wireless communication circuit. The second portion 2112 of the outer frame 211 may be configured to be electrically connected to the ground. The wireless communication circuit may be configured to supply the outer frame 211 through the first portion 2111 of the outer frame 211.

According to an embodiment, the housing 210 may have a ring shape and may include an opening 214 for accommodating the electronic components (224, 243, 292, 294, 296) inside. The electronic device 200 may include a display module 220 accommodated inside the housing 210 and at least partially visible on one surface of the housing 210. The electronic device 200 may include a fastening member 250 that is detachably coupled to the housing 210 to allow the electronic device 200 to be attachable and detachable from a user's body part.

A wearable electronic device 200, according to an embodiment of the disclosure, that can be worn on a user's body part may include electronic components 224, 243, 263, 292, 294, 296. The wearable electronic device 200 may include a circuit board 290 that is electrically connected to the electronic components 224, 243, 263, 292, 294, 296 and includes a wireless communication circuit and ground. The wearable electronic device 200 may include a ring-shaped housing 210 that accommodates the electronic components 224, 243, 292, 294, 296 and the circuit board 290 inside and is configured to be attachable and detachable from a user's body part. The housing 210 may include an outer frame 211 formed of conductive material and an inner frame 213 integrally formed on the inner surface of the outer frame 211 and formed of non-conductive material. The outer frame 211 may be electrically connected to the wireless communication circuit and the ground of the circuit board 290 and may be configured such that at least a portion thereof operates as an antenna element. A portion of the inner frame 213 may be positioned between the outer frame 211 and the electronic components 224, 243, 292, 294, 296 to separate the outer frame 211 and the electronic components 224, 243, 292, 294, 296.

## Claims

1. An electronic device (200), comprising:
an electronic component (224, 243, 263, 292, 294, 296);
a housing (210) accommodating the electronic component (224, 243, 292, 294, 296), the housing (210) including an outer frame (211) formed of a conductive material and an inner frame (213) integrally formed on an inner surface of the outer frame (211) and formed of a non-conductive material; and
a circuit board (290) disposed inside the housing (210), the circuit board (290) including a wireless communication circuit and a ground,
wherein the outer frame (211) is electrically connected to the wireless communication circuit and the ground and is configured to use at least a portion thereof as an antenna element, and
wherein a portion of the inner frame (213) is positioned between the outer frame (211) and the electronic component (224, 243, 292, 294, 296) so as to separate the outer frame (211) from the electronic component (224, 243, 292, 294, 296).

2. The electronic device (200) of claim 1,
wherein the inner frame (213) is configured to restrict noise generated from the electronic component (224, 243, 292, 294, 296) from being transmitted to the outer frame (211).

3. The electronic device (200) of claim 1 or 2,
further comprising a bracket (280) configured to fix the circuit board (290) and/or the electronic component (263, 296) inside the housing (210).

4. The electronic device (200) of claim 3,
wherein the inner frame (213) is adjacent to the bracket (280) and surrounds the bracket (280) and spaces the outer frame (211) apart from the electronic component (224, 243, 263, 292, 294, 296) in a horizontal direction.

5. The electronic device (200) of any one of claims 1 to 4,
wherein the inner frame (213) is integrally formed on the outer frame (211) by an insert injection process.

6. The electronic device (200) of any one of claims 1 to 5,
wherein the inner frame (213) spaces the outer frame (211) apart from the electronic component (224, 243, 263, 292, 294, 296).

7. The electronic device (200) of any one of claims 1 to 6,
wherein the housing (210) has a ring shape and includes an opening (214) for accommodating the electronic component (224, 243, 263, 292, 294, 296) therein, and
wherein the inner frame (213) extends along the inner surface of the outer frame (211).

8. The electronic device (200) of any one of claims 1 to 7,
wherein the outer frame (211) includes a first portion (2111) and a second portion (2112) extending inwardly of the outer frame (211) so as to face at least a portion of the circuit board (290).

9. The electronic device (200) of claim 8,
wherein the first portion (2111) of the outer frame (211) is configured to be electrically connected to the wireless communication circuit,
wherein the second portion (2112) of the outer frame (211) is configured to be electrically connected to the ground, and
wherein the wireless communication circuit is configured to feed the outer frame (211) through the first portion (2111) of the outer frame (211).

10. The electronic device (200) of any one of claims 1 to 9,
wherein the housing (210) has a ring shape and includes an opening (214) in which the electronic component (224, 243, 292, 294, 296) is accommodated on an inner side thereof, and
further comprising:
a display module (220) accommodated inside the housing (210) and formed such that at least a portion thereof is visible on one surface of the housing (210); and
a fastening member (250) detachably coupled to the housing (210) so as to enable the electronic device (200) to be detachably attached to a body part of a user.

11. A wearable electronic device (200) wearable on a body part of a user, comprising:
an electronic component (224, 243, 263, 292, 294, 296);
a circuit board (290) electrically connected to the electronic component (224, 243, 263, 292, 294, 296), the circuit board (290) including a wireless communication circuit and a ground; and
a ring-shaped housing (210) accommodating the electronic component (224, 243, 292, 294, 296) and the circuit board (290) therein, the ring-shaped housing (210) being configured to be detachably attached to the body part of the user,
wherein the housing (210) includes an outer frame (211) formed of a conductive material and an inner frame (213) integrally formed on an inner surface of the outer frame (211) and formed of a non-conductive material,
wherein the outer frame (211) is electrically connected to the wireless communication circuit and the ground of the circuit board (290) and is configured such that at least a portion thereof operates as an antenna element, and
wherein a portion of the inner frame (213) is positioned between the outer frame (211) and the electronic component (224, 243, 292, 294, 296) so as to separate the outer frame (211) from the electronic component (224, 243, 292, 294, 296).

12. The wearable electronic device (200) of claim 11,
wherein the inner frame (213) is configured to restrict noise generated from the electronic component (224, 243, 292, 294, 296) from being transmitted to the outer frame (211).

13. The wearable electronic device (200) of claim 11 or 12,
further comprising a bracket (280) configured to fix the circuit board (290) and/or the electronic component (263, 296) inside the housing (210).

14. The wearable electronic device (200) of claim 13,
wherein the inner frame (213) is adjacent to the bracket (280) and surrounds the bracket (280) and spaces the outer frame (211) apart from the electronic component (224, 243, 263, 292, 294, 296) in a horizontal direction.

15. The wearable electronic device (200) of any one of claims 11 to 14,
wherein the inner frame (213) is integrally formed on the outer frame (211) by an insert injection process.
